# EUROPÄISCHE PATENTANMELDUNG

(11) **EP 2 277 685 A1**
(43) Veröffentlichungstag der Anmeldung: **26.01.2011**
(21) Anmeldenummer: 10168496.7
(22) Anmeldetag: 06.07.2010
(51) Int. Cl.: B29C 65/50, B29C 65/20, E01D 19/04, E04B 1/68, E04F 13/12

(54) **Verfahren zum Verbinden von Teilen aus einem vulkanisierten Gummiwerkstoff und/oder aus Metall mittels einer Klebefolie**

(30) Priorität: 14.07.2009 CH 10962009
(71) Anmelder: Schoop + Co. AG, 5405 Baden-Dättwil (CH)
(72) Erfinder: Arnold, Joder, 6467 Schattdorf (CH)
(74) Vertreter: Falk, Urs

(57) **Zusammenfassung**

Ein Verfahren zur Herstellung eines Verbunds aus mindestens zwei Teilen (1, 4), von denen ein erstes Teil (1) aus einem Gummiwerkstoff und ein zweites Teil (4) aus einem Gummiwerkstoff oder aus Metall besteht, wobei eine erste Fläche des ersten Teils (1) mit einer zweiten Fläche des zweiten Teils (4) verbunden wird, umfasst die Schritte:
A) Bereitstellen des ersten Teils aus dem Gummiwerkstoff als vulkanisiertes Gummiteil,
B) Bereitstellen des zweiten Teils aus dem Gummiwerkstoff als vulkanisiertes Gummiteil, sofern das zweite Teil aus einem Gummiwerkstoff besteht, oder Reinigen der zweiten Fläche, um Fettspuren und eine allfällige Oxidschicht zu entfernen, sofern das zweite Teil aus Metall besteht,
C) Bilden eines dauerhaften Verbunds aus dem ersten Teil (1) und dem zweiten Teil (4) durch Verkleben der beiden Teile mittels einer Klebefolie (3).

## Beschreibung

Die Erfindung betrifft ein Verfahren zum Verbinden von Teilen oder Flächen aus einem Gummiwerkstoff und/oder Metall.

### STAND DER TECHNIK

Die Verbindung eines Teils aus Metall und eines Teils aus Gummi erfolgt heutzutage mittels eines Verfahrens, das im wesentlichen die folgenden Schritte umfasst:
- Reinigen des Metalls, um Fettspuren und Oxidschichten zu entfernen. Dies erfolgt in der Regel durch Sandstrahlen.
- Auftragen einer Primerschicht auf das Metall.
- Auftragen einer Haftschicht auf die Primerschicht.
- Platzieren des Gummiteils auf dem Metallteil, wobei sich nun die Primerschicht und die Haftschicht zwischen den beiden Teilen befinden.
- Erwärmen des Verbunds, um das Gummiteil zu vulkanisieren.

Der letzte Schritt muss innerhalb einer Form erfolgen, da der Gummi sonst beim Vulkanisieren auseinanderläuft. Es sind zudem zwei Schichten, nämlich die Primerschicht und die Haftschicht erforderlich, um die dauerhafte Verbindung zwischen den beiden Teilen zu erreichen.

Zum Verbinden von Gummistreifen zu einem Gummidichtungsring ist es bekannt aus DE-C-198 20 293, auf den beiden Stirnenden eines länglichen Gummistreifens ein Vulkanisationsmittel aufzutragen, um den Gummistreifen so zu einem geschlossenen Ring zu formen, wobei die Nahtstelle zwischen den Stirnenden beheizt und ausvulkanisiert wird. Dabei werden die beiden Stirnenden während des Heizvorgangs gegeneinandergepresst. Die zugehörige Vorrichtung weist zwei beheizbare, einander zustellbare Pressbacken auf. In den Pressbacken sind Ausnehmungen zur Aufnahme des Dichtungsringes vorgesehen, die an die Kontur des Dichtungsringes angepasst sind. Eine der beiden Pressbacken ist aus drei hintereinander angeordneten Teilen ausgebildet, wobei die beiden äusseren Teile aufeinander zustellbar sind. Die Ausnehmungen der beiden äusseren Teile sind dichter anliegend an der Kontur des Gummistreifens ausgebildet als die Ausnehmung des mittleren Teils.

Die Verbindung von Gummistreifen mit einem Vulkanisationsmittel und einem lokalen Vulkanisationsvorgang braucht einen hohen apparativen Aufwand und kann somit nur in einer industriellen Umgebung vorgenommen werden.

Wenn das obige Verfahren an grösseren Gummiteilen, z.B. dickere Gummischeiben oder dergleichen, angewendet werden soll, ist der apparative Aufwand noch grösser.

### AUFGABE DER ERFINDUNG

Der vorliegenden Erfindung liegt die Aufgabe zugrunde, ein Verbindungsverfahren für Teile aus einem Gummiwerkstoff und/oder aus Metall anzugeben, welches einfach ist und bei gewissen Anwendungen direkt vor Ort durchgeführt werden kann. Dabei sollen Teile von kleiner bis grosser Dicke zusammengefügt werden können.

### GEGENSTAND DER ERFINDUNG

Diese Aufgabe wird durch ein Verbindungsverfahren mit den Merkmalen des Patentanspruchs 1 gelöst. Ausgangspunkt des Verbindungsverfahrens sind vulkanisierte Gummiteile, die mittels Klebefolien miteinander und/oder oder mit Teilen aus Metall zu einem Verbund verbunden werden, wobei die Klebefolien durch Erwärmung zum Schmelzen gebracht und dadurch aktiviert werden, so dass eine dauerhafte Verbindung entsteht. Die abhängigen Ansprüche betreffen vorteilhafte Varianten und Arbeitsbereiche, insbesondere vorteilhafte Arbeitsbereiche von Druck und Temperatur.

Als Klebefolien eignen sich beispielsweise thermoplastische Folien, insbesondere thermoplastische Folien aus einem Polyolefin wie beispielsweise Polypropylen oder Polyethylen, oder Folien aus einem Copolymer. Die Klebefolien zeichnen sich dadurch aus, dass sie ihre Klebefähigkeit erst bei Erwärmung über ihren Schmelzpunkt entfalten, die nach dem Abkühlen erhalten bleibt.

Das erfindungsgemässe Verbindungsverfahren hat den grossen Vorteil, dass sowohl grössere Gummiteile wie beispielsweise dicke Gummischeiben als auch kleinere Gummiteile wie beispielsweise Gummistreifen auf einfache Art und ohne grossen apparativen Aufwand an einem beliebigen Ort miteinander oder mit einem Teil aus Metall verbunden werden können, beispielsweise um einen Dichtungsring oder ein Drucklager zu erhalten. Bei der Verbindung von Gummiteile und Metallteilen ergibt sich der Vorteil, dass das kostspielige Auftragen von Primerschicht und Haftschicht entfällt.

### BESCHREIBUNG VON AUSFÜHRUNGSBEISPIELEN DER ERFINDUNG

Die Erfindung wird nun anhand von Ausführungsbeispielen und der Zeichnung näher erläutert. Die Figuren sind schematisch und nicht massstäblich gezeichnet. Es zeigen:
- Fig. 1 - 4: Schritte eines Verfahrens zum Verbinden von zwei Teilen aus einem Gummiwerkstoff und/oder Metall,
- Fig. 5: einen nach dem Verfahren hergestellten Verbund mit drei dicken Gummischeiben,
- Fig. 6: einen nach dem Verfahren hergestellten Verbund mit zwei aussen- liegenden Metallplatten und einer inneren Gummischeibe,
- Fig. 7: einen nach dem Verfahren hergestellten Verbund mit drei Metallplat- ten und zwei Gummischeiben,
- Fig. 8, 9: Schritte eines Verfahrens zum Herstellen eines Dilatationselementes, und
- Fig. 10, 11: Schritte eines Verfahrens zum Verbinden der Stirnseiten von zwei einander gegenüberliegenden Gummistreifen.

Die Erfindung wird im folgenden im Detail erläutert anhand verschiedener Beispiele, nämlich
   1) eines Verfahrens zur Herstellung eines Drucklagers, das aus mehreren Gummiteilen besteht,
   2) eines Verfahrens zur Herstellung eines Drucklagers oder eines Fassadenelementes, das aus Gummiteilen und Metallteilen besteht,
   3) eines Verfahrens zur Herstellung eines Dilatationselementes, und
   4) eines Verfahrens zur Herstellung eines Dichtungsringes aus Gummi.

### 1. Verfahren zur Herstellung eines Drucklagers aus Gummiteilen

Dieses Verfahren wird nun im Detail erläutert für ein Drucklager, bei dem zwei Teile 1 und 4 aus einem Gummiwerkstoff miteinander zu einem Verbund verbunden werden, und zwar anhand von zwei Varianten. Die beiden Teile sind beispielsweise scheibenförmig oder plattenförmig mit einem beliebigen Umriss. Ein solches Drucklager wird beispielsweise bei Strassenbrücken eingesetzt. Das Verfahren umfasst gemäss Variante 1 die folgenden Schritte A bis D:
A) Bereitstellen der beiden Teile 1 und 4 als vulkanisierte Gummiteile.
   Ausgangspunkt des Verfahrens sind vulkanisierte Gummiteile, deren wesentliche Eigenschaft darin besteht, dass sie ihre Form und Grösse bei den nachfolgenden Schritten nicht mehr ändern. Drucklager unterschiedlicher Grösse lassen sich auf einfache Weise herstellen, indem beispielsweise eine grosse Platte aus Gummi vulkanisiert wird und dann Scheiben oder Platten entsprechend dem Umriss und der Abmessung des Drucklagers aus der vulkanisierten Platte ausgestanzt werden. Diese vulkanisierten Gummischeiben und Gummiplatten sind Beispiele für die Form der Teile 1 und 4.
B) Bilden eines Verbunds aus dem ersten Teil 1 und dem zweiten Teil 4 und einer Klebefolie 3, wobei sich die Klebefolie 3 zwischen den Teilen 1 und 4 befindet,
C) Zusammenpressen und Erwärmen des Verbunds auf eine Temperatur, die höher ist als eine vorbestimmte Mindesttemperatur, so dass die Klebefolie 3 schmilzt,
D) Abkühlen des Verbunds.

Auf welche Art und Weise die Verfahrensschritte B und C im einzelnen durchgeführt werden, hängt davon ab, ob das Drucklager als Einzelanfertigung oder in kleiner Stückzahl und/oder lokal vor Ort, zum Beispiel auf einer Baustelle, oder ob es in grösserer Stückzahl in einer industriellen Umgebung hergestellt wird.

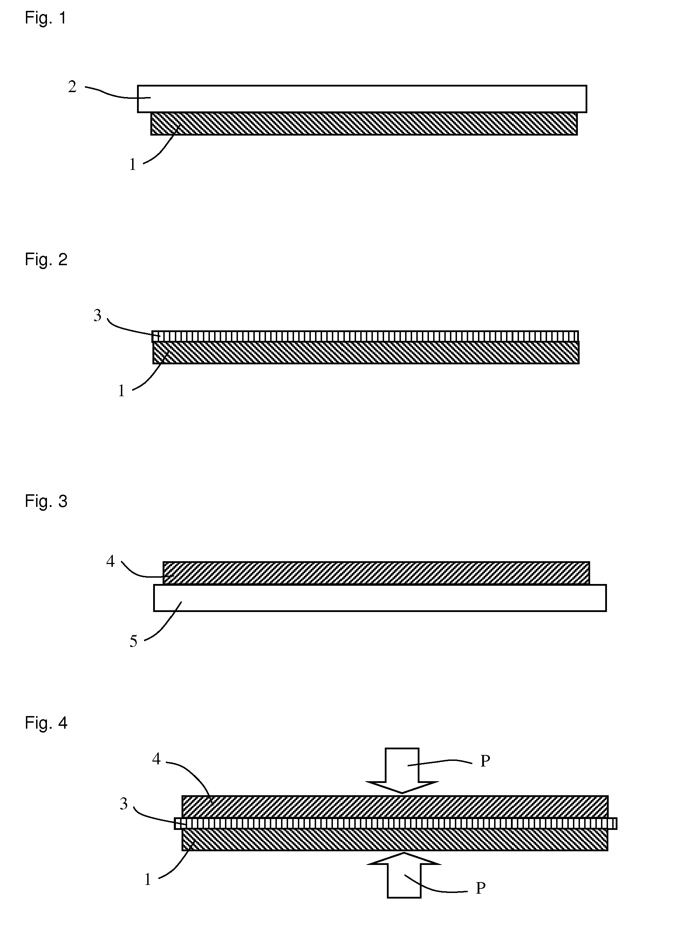

Die Fig. 1 bis 4 illustrieren ein Verfahren gemäss Variante 2, das sich sehr gut für kleine Stückzahlen eignet. Bei diesem Verfahren erfolgen die Tätigkeiten der Verfahrensschritte B und C in leicht modifizierter Form und Reihenfolge, nämlich durch die Schritte
C1) Erwärmen der Teile 1 und 4 oder zumindest der miteinander zu verklebenden Flächen der Teile 1 und 4 auf eine Temperatur, die höher ist als die vorbestimmte Mindesttemperatur,
B) Bilden eines Verbunds aus dem ersten Teil 1 und dem zweiten Teil 4 und einer Klebefolie 3, wobei die Klebefolie 3 schmilzt, sobald sie in Kontakt mit dem über ihre Schmelztemperatur erwärmten Teil 1 und/oder Teil 4 kommt,
C2) Zusammenpressen des Verbunds.

Im wesentlichen wird also der Verfahrensschritt C in zwei Teilschritte C1 und C2 aufgeteilt und der Teilschritt C1 vor dem Verfahrensschritt B durchgeführt.

Das Erwärmen der Teile 1 und 4 im Verfahrenschritt C1 kann mittels unterschiedlicher, bevorzugt mobiler, Wärmequellen erfolgen, beispielsweise mittels eines Ofens, eines Heizspiegels, eines Infrarotstrahlers, eines Heissluftföhns, etc. Die Fig. 1 zeigt die Erwärmung des ersten Teils 1, das im vorliegenden Fall eine dicke Gummischeibe ist, durch einen oberhalb des ersten Teils 1 angeordneten Heizspiegel 2. In der Regel berührt der Heizspiegel 2 die Gummischeibe und erwärmt sie durch direkte Wärmeübertragung. Die Temperatur kann beispielsweise mit einem Strahlungsthermometer (Pyrometer) gemessen werden. Die Mindesttemperatur hängt von der Klebefolie 3 ab. Sie liegt in der Regel um 20 bis 100°C höher als die Schmelztemperatur der Klebefolie 3. In der Praxis erhaltene Werte sind:
100 bis 130°C, typischerweise 110°C für die Schmelztemperatur, und
150 bis 200°C für die zu erreichende Mindesttemperatur.

Die Fig. 2 zeigt den Zustand, nachdem die Klebefolie 3 auf eine Oberfläche des ersten Teils 1 aufgebracht wurde.

Die Fig. 3 zeigt, wie das zweite Teil 4, im vorliegenden Fall ebenfalls eine dicke Gummischeibe, mittels eines Heizspiegels 5 erwärmt wird, ebenfalls auf eine vorbestimmte Mindesttemperatur, die bevorzugt ebenfalls im Bereich zwischen 150 und 200°C liegt. Der Heizspiegel 5 ist in der Fig. 3 als unterhalb des Teils 4 liegend dargestellt, um zu illustrieren, dass es beim Erwärmen der Teile 1 und 4 vor allem darum geht, die miteinander zu verbindenden Oberflächen zu erwärmen.

Das Erwärmen der Teile 1 und 4 und das Aufbringen der Klebefolie 3 werden mit Vorteil soweit als möglich parallel durchgeführt. Die Teile 1 und 4 werden dann zu einem Verbund zusammengefügt, so dass sich die Klebefolie 3 zwischen den beiden Teilen 1 und 4 befindet. Die Klebefolie 3 schmilzt, sobald sie in Kontakt mit dem Teil 1 und/oder dem Teil 4 kommt.

Die Fig. 4 illustriert schematisch den Verfahrenschritt C2. Der Verbund wird in einer Presse mit zwei Pressbacken P zusammengepresst. Der Pressdruck liegt typischerweise in einem Bereich von 800 bis 3000 Gramm/cm². Der Pressdruck wird für eine gewisse Dauer aufrechterhalten, um sicherzustellen, dass die Verbindung zwischen den Teilen 1 und 4 nach dem Abkühlen dauerhaft ist.

Der Pressdruck wird während des Abkühlens aufrechterhalten, bis sich der Verbund auf eine unterhalb der Schmelztemperatur der Klebefolie 3 liegende Temperatur, typischerweise auf eine Temperatur von 60 bis 80°C, vorzugsweise etwa 70 °C, abgekühlt hat.

Ein nach diesem Verfahren hergestellter Verbund ist nun seinerseits ein Teil aus einem Gummiwerkstoff und kann mit weiteren Teilen aus einem Gummiwerkstoff oder aus Metall verbunden werden. Das erfindungsgemässe Verfahren kann nämlich auch zum Verbinden eines ersten Teils aus einem Gummiwerkstoff und eines zweiten Teils, das aus Metall besteht, verwendet werden. In diesem Fall eignet sich als Klebefolie 3 insbesondere eine Folie aus einem Copolymer.

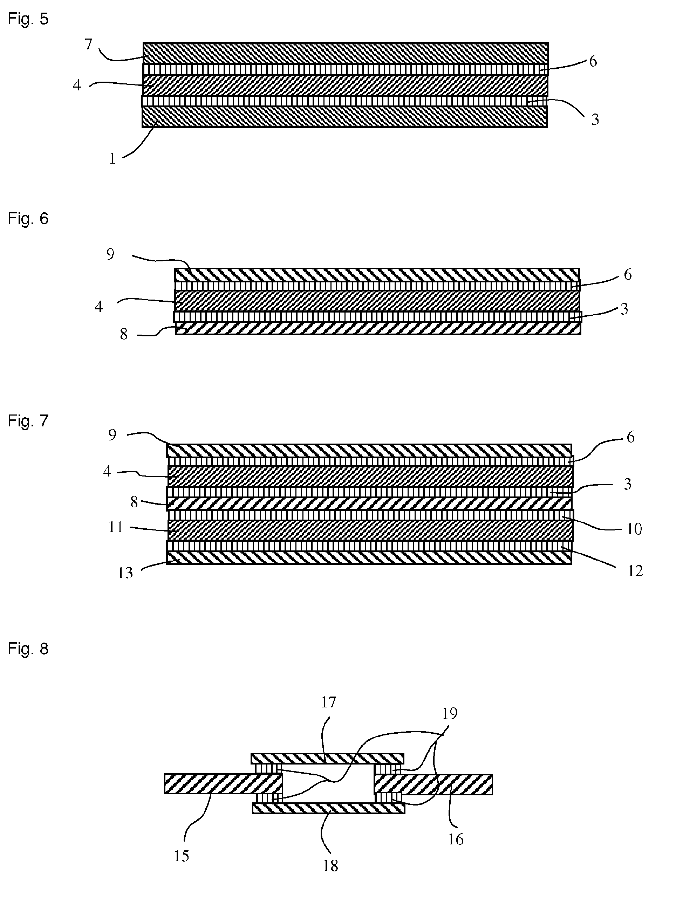

Die Fig. 5 zeigt einen Verbund aus drei dicken Gummischeiben 1, 4 und 7, welche mittels dünner Klebefolie 3 und 6 miteinander verklebt worden sind. Ein solches Drucklager, das aus mehr als zwei Teilen 1 und 4 gebildet ist, kann bis zu einer gewissen Anzahl von Teilen gemäss der Variante 1 oder der Variante 2 hergestellt werden. Bei einem Drucklager mit drei Gummischeiben kann z.B. das Verfahren gemäss Variante 2 zweimal durchgeführt werden, zuerst um die beiden Gummischeiben 1 und 4 miteinander zu verbinden, und dann noch einmal um den so entstandenen Verbund mit der Gummischeibe 7 zu verbinden. Das Drucklager kann aber auch gemäss Variante 1 hergestellt werden, in dem im Verfahrensschritt B der Verbund in der in der Fig. 5 dargestellten Reihenfolge gebildet wird. Zu bemerken ist noch, dass die Klebefolie 3 in diesen Schnittzeichnungen ohne Vergrösserung nicht mehr sichtbar wäre.

Es ist möglich, auf die gleiche Art und Weise mittels einer weiteren Klebefolie ein Vlies oder dergleichen auf der Bodenfläche bzw. Deckfläche des Verbunds zu befestigen.

### 2. Verfahren zur Herstellung eines Drucklagers oder eines Fassadenelementes aus Gummiteilen und Metallteilen

Die Fig. 6 zeigt einen Verbund, der aus zwei Metallplatten 8 und 9 und einem Gummiteil in Form einer Gummischeibe 4 besteht, welche mittels Klebefolien 3 und 6 miteinander verklebt worden sind. Die Metallplatten 8 und 9 bestehen beispielsweise aus rostfreiem Stahl. Ein solcher Verbund kann Verwendung finden als Drucklager oder als Fassadenelement, wobei dann natürlich die verwendeten Metalle und die Abmessungen des Verbunds entsprechend seinem Zweck anzupassen sind. Das erfindungsgemässe Verfahren ermöglicht die Herstellung von grossflächigen Fassadenelementen, die eine ausreichende Stabilität aufweisen und dem Architekten viele Gestaltungsmöglichkeiten bieten. Ein solches Fassadenelement besteht aus zwei Metallblechen und einem Gummiteil, die miteinander mittels Klebefolien verklebt sind, und hat den Aufbau des in der Fig. 6 dargestellten Verbunds. Die Metallplatten 8 und 9 sind grossflächige Bleche von typischerweise mehreren Quadratmetern und können aus den verschiedensten Metallen und Metalllegierungen bestehen.

Falls ein Drucklager mit einer noch grösseren Dicke benötigt wird, können weitere Gummischeiben und Metallplatten in abwechselnder Reihenfolge hinzu verbunden werden. Die Fig. 7 zeigt als Beispiel einen Verbund mit drei Metallplatten 8, 9 und 13 und dazwischenliegenden Gummischeiben 4 und 11, die mittels Klebefolien 6, 3, 10 und 12 dauerhaft verklebt wurden.

Diese Verbunde können im Prinzip mit den gleichen, oben beschriebenen Verfahren wie die Drucklager ohne Metallteile hergestellt werden, wobei jedoch die zu verklebenden Flächen der Metallteile vor dem Verfahrensschritt B, in dem der Verbund gebildet wird, gereinigt werden müssen, um allfällige Fettspuren wie auch eine allfällige Oxidationsschicht zu entfernen. Diese Reinigung erfolgt beispielsweise durch Sandstrahlen, das den Vorteil hat, dass die Metallfläche zugleich aufgeraut wird, was die Haftfähigkeit verbessert. Das Verfahren umfasst gemäss einer ersten Variante die Schritte:
A1) Bereitstellen der Gummiteile als vulkanisierte Gummiteile.
A2) Reinigen der zu verklebenden Flächen der Metallteile.
B) Bilden eines Verbunds aus den zu verklebenden Teilen und Klebefolien,
C) Zusammenpressen und Erwärmen des Verbunds auf eine Temperatur, die höher ist als eine vorbestimmte Mindesttemperatur, so dass die Klebefolien schmelzen, und
D) Abkühlen des Verbunds auf eine tiefere Temperatur.

Das Verfahren umfasst gemäss einer zweiten Variante die Schritte:
A1) Bereitstellen der Gummiteile als vulkanisierte Gummiteile.
A2) Reinigen der zu verklebenden Flächen der Metallteile.
C1) Erwärmen der zu verklebenden Flächen auf eine Temperatur, die höher ist als eine vorbestimmte Mindesttemperatur,
B) Bilden eines Verbunds aus den zu verklebenden Teilen und Klebefolien, C2) Zusammenpressen des Verbunds, und
D) Abkühlen des Verbunds.

### 3. Verfahren zur Herstellung eines Dilatationselementes

Das erfindungsgemässe Verfahren eignet sich auch zur Herstellung eines Dilatationselementes, das die in den Fig. 8 im Schnitt und 9 in Aufsicht dargestellte Grundstruktur aufweist. Das Dilatationselement umfasst zwei im Abstand zueinander verlaufende Metallstreifen 15 und 16, die durch einen einzigen Gummistreifen 17 oder zwei Gummistreifen 17 und 18 miteinander verbunden sind. Die Metallstreifen 15 und 16 und die Gummistreifen 17 und 18 sind mittels Klebefolien 19 miteinander verklebt. Die Klebefolien 19 können wie dargestellt nur dort vorhanden sein, wo die Gummistreifen 17 und 18 und die Metallstreifen 15 und 16 überlappen, oder wenigstens eine davon kann die gleiche Breite wie die Gummistreifen 17 und 18 aufweisen, um zu erreichen, dass auch die beiden Gummistreifen 17 und 18 miteinander verklebt werden.

Das Verfahren umfasst die Schritte:
A1) Bereitstellen der Gummistreifen als vulkanisierte Gummistreifen.
A2) Reinigen der zu verklebenden Flächen der Metallstreifen.
B) Bilden des Dilatationselementes als Verbund aus den zu verklebenden Teilen und Klebefolien,
C) Zusammenpressen und Erwärmen des Verbunds auf eine Temperatur, die höher ist als eine vorbestimmte Mindesttemperatur, so dass die Klebefolien schmelzen, und
D) Abkühlen des Verbunds auf eine tiefere Temperatur.

Das Verfahren kann beispielsweise mit einer herkömmlichen Rotations-Vulkanisationsanlage (auch als Rotations-Vulkanisationspresse bekannt) durchgeführt werden. Die Anlage wird dabei benutzt, um die Metallstreifen und Gummistreifen durch Aktivierung der Klebefolie unter Anwendung von Druck und erhöhter Temperatur dauerhaft zu verkleben. Eine Vulkanisation der Gummistreifen erfolgt jedoch nicht mehr, da die Gummistreifen bereits als organisierte Gummistreifen zugeführt werden. Eine solche Anlage eignet sich auch, um anstelle von einzelnen Dilatationselementen ein beliebig langes Dilatationselement, d.h. ein Dilatationsband herzustellen.

Die beschriebenen Verfahren eignen sich auch, um zwei Teile (aus vulkanisiertem Gummi und/oder aus Metall) in Form einer Gehrung miteinander zu verbinden, was zu einer grösseren Verbindungsfläche führt.

### 4. Verfahren zur Herstellung eines Gummiringes

Das erfindungsgemässe Verfahren eignet sich des weiteren, um direkt vor Ort aus einem Gummistreifen einen Dichtungsring zu bilden. Dabei müssen nur die Endbereiche des Gummistreifens erwärmt werden. Der Verfahrenschritt C des Zusammenpressens und die Abkühlung erfolgt in diesem Fall jedoch mit Vorteil in einer Negativform, in welche zumindest die Endbereiche des zu einem Ring geformten Gummistreifens hineingelegt werden können. Des weiteren ist es natürlich möglich, die Enden des Gummistreifens zu gehren, um eine grössere Verbindungsfläche zu erhalten.

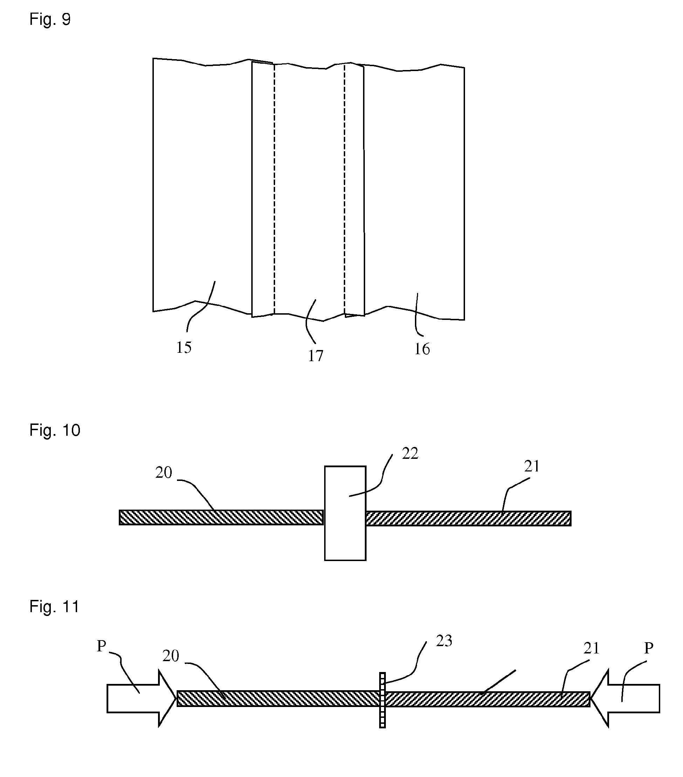

Die Fig. 10 und 11 illustrieren das erfindungsgemässe Verfahren für die Verbindung von zwei vulkanisierten Gummistreifen 20 und 21. Die zu verbindenden Enden bzw. Stirnseiten der Gummistreifen 20 und 21 werden erwärmt, beispielsweise mittels eines Heizspiegels 22 (Fig. 10), und dann mit einer dazwischenliegenden Folie 23 unter einem gegenseitigen Druck P zusammengepresst (siehe Figur 11). Die Gummistreifen 20 und 21 können dazu in eine Negativform eingelegt sein, um sie bem Zusammenpressen richtig führen zu können, so dass die Stirnseiten genau aneinander zu liegen kommen. Überschüsse der Folie 23 werden bei Bedarf anschliessend entfernt. Ein einziger Gummistreifen kann auf die gleiche Art und Weise zu einem Dichtungsring verarbeitet werden.

Die verwendeten Klebefolien 3 haben den Vorteil, dass sie nicht klebrig sind und ihre Klebefähigkeit erst nach Erwärmung über eine vorbestimmte Temperatur entfalten.

## Patentansprüche

1. Verfahren zur Herstellung eines Verbunds aus mindestens zwei Teilen, von denen ein erstes Teil aus einem Gummiwerkstoff und ein zweites Teil aus einem Gummiwerkstoff oder aus Metall besteht, wobei eine erste Fläche des ersten Teils mit einer zweiten Fläche des zweiten Teils verbunden wird, umfassend die Schritte:
A) Bereitstellen des ersten Teils aus dem Gummiwerkstoff als vulkanisiertes Gummiteil,
B) Bereitstellen des zweiten Teils aus dem Gummiwerkstoff als vulkanisiertes Gummiteil, sofern das zweite Teil aus einem Gummiwerkstoff besteht, oder
Reinigen der zweiten Fläche, um Fettspuren und eine allfällige Oxidschicht zu entfernen, sofern das zweite Teil aus Metall besteht,
C) Bilden eines dauerhaften Verbunds aus dem ersten Teil (1) und dem zweiten Teil (4) durch Verkleben der beiden Teile mittels einer Klebefolie (3).

2. Verfahren nach Anspruch 1, **dadurch gekennzeichnet, dass** der Schritt C die folgenden Schritte umfasst:
C1) Erwärmen der Teile (1) und (4) oder zumindest der miteinander zu verklebenden Flächen der Teile (1) und (4) auf eine Temperatur, die höher ist als eine vorbestimmte Mindesttemperatur,
C2) Bilden eines Verbunds aus dem ersten Teil (1) und dem zweiten Teil (4) und der Klebefolie (3), wobei sich die Klebefolie (3) zwischen den Teilen (1) und (4) befindet,
C3) Zusammenpressen des Verbunds, und
C4) Abkühlen des Verbunds.

3. Verfahren nach Anspruch 1, **dadurch gekennzeichnet, dass** der Schritt C die folgenden Schritte umfasst:
C1) Bilden eines Verbunds aus dem ersten Teil (1) und dem zweiten Teil (4) und der Klebefolie (3), wobei sich die Klebefolie (3) zwischen den Teilen (1) und (4) befindet,
C1) Zusammenpressen des Verbunds und Erwärmen des Verbunds oder zumindest der miteinander zu verklebenden Flächen auf eine Temperatur, die höher ist als eine vorbestimmte Mindesttemperatur,
C3) Warten, bis die Klebefolie (3) schmilzt, und
C4) Abkühlen des Verbunds.

4. Verfahren nach Anspruch 3, **dadurch gekennzeichnet, dass** das Zusammenpressen in einer Negativform erfolgt.

5. Verfahren nach einem der Ansprüche 1 bis 4, **dadurch gekennzeichnet, dass** die Teile (1, 4) auf eine Temperatur erwärmt werden, die höher ist als eine Schmelztemperatur der Klebefolie (3).

6. Verfahren nach einem der Ansprüche 1 bis 5, **dadurch gekennzeichnet, dass** das Abkühlen des Verbunds bis auf eine Temperatur im Bereich von 60 bis 80°C noch während des Zusammenpressens erfolgt.

7. Verfahren nach einem der Ansprüche 1 bis 6, **dadurch gekennzeichnet, dass** die Teile bzw. Flächen (1, 4) mit einem Anpressdruck von 800 bis 3000 Gramm/cm² gegeneinander gepresst werden.

8. Verfahren nach einem der Ansprüche 1 bis 6, **dadurch gekennzeichnet, dass** die Teile (1, 4) ein einziger Gummistreifen mit zwei miteinander zu verklebenden Flächen sind.

9. Drucklager mit mehreren Scheiben aus einem Gummiwerkstoff, hergestellt nach einem Verfahren nach einem der Ansprüche 1 bis 7.

10. Drucklager mit mindestens einer Scheibe aus einem Gummiwerkstoff und mindestens zwei Metallplatten, hergestellt nach einem Verfahren nach einem der Anspruche 1 bis 7.

11. Dilatationselement mit zwei Metallstreifen (15,16) und mindestens einem Gummistreifen (17,18), hergestellt nach einem Verfahren nach einem der Anspruche 1 bis 7.

12. Fassadenelement mit zwei Metallblechen und einem dazwischen liegenden Gummiteil, hergestellt nach einem Verfahren nach einem der Anspruche 1 bis 7.
